# EUROPEAN PATENT APPLICATION

(11) **EP 4 815 188 A1**
(43) Date of publication of application: **30.09.2026**
(21) Application number: 26164852.1
(22) Date of filing: 16.03.2026
(51) Int. Cl.: H01M 50/627, H01M 50/636, H01M 50/664

(54) **SECONDARY BATTERY AND MANUFACTURING METHOD THEREOF**

(30) Priority: 25.03.2025 KR 20250037685
(71) Applicant: SAMSUNG SDI CO., LTD., Yongin-si, Gyeonggi-do 17084 (KR)
(72) Inventor: KIM, Soyun, 17084 Yongin-si (KR); CHO, Byunghuy, 17084 Yongin-si (KR); BYEON, Junho, 17084 Yongin-si (KR)
(74) Representative: Maiwald GmbH

(57) **Abstract**

A secondary battery includes: an electrode assembly including a first electrode, a second electrode, and a separator between the first electrode and the second electrode; a case accommodating the electrode assembly, and having an electrolyte injection hole penetrating one side of the case for injecting an electrolyte therein; and a sealing plate on the one side of the case to seal the electrolyte injection hole. The case and the sealing plate include a same metallic material as each other.

## Description

### BACKGROUND

### 1. Field

Aspects of embodiments of the present disclosure relate to a secondary battery, and a method of manufacturing the secondary battery.

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles, and for storing power (e.g., home and/or utility scale power storage). A secondary battery generally includes an electrode assembly composed of a positive electrode and a negative electrode, a case accommodating the electrode assembly, and electrode terminals connected to the electrode assembly.

Secondary batteries may be classified as lithium-ion batteries that use a liquid electrolyte and lithium-polymer batteries that use a polymer electrolyte according to the kind of electrolyte used, or as cylindrical, prismatic, and pouch-kind of batteries according to their manufactured shape.

Generally, in order to manufacture a pouch-kind of secondary battery, a flat film case is produced by a mold machine or a press, and then, with the case sealed, an electrolyte is injected. When the electrolyte is injected, a pre-charging process in which charging and discharging are performed while heat and pressure are applied, and an aging process in which the charged and discharged secondary battery is left at room temperature so that the electrolyte is evenly dispersed inside, are carried out. In addition, while the charging, discharging, and aging processes are performed, gas may be generated, and a degassing process in which the gas generated during aging is removed by forming an air-pocket space is additionally performed.

The above information disclosed in this Background section is for enhancement of understanding of the background of the present disclosure, and therefore, it may contain information that does not constitute related (or prior) art.

### SUMMARY

In a secondary battery in which a case is of a can-kind rather than a film-kind, a separate electrolyte injection hole may be used. However, in a can-kind of secondary battery, the electrolyte may leak (e.g., may easily leak), or the inside of the secondary battery may be contaminated during a pre-charging and aging processes. Therefore, an improved sealing member may be desired.

Embodiments of the present disclosure may be directed to a secondary battery having an improved sealing member and/or an improved electrolyte impregnation, and a manufacturing method of the secondary battery.

However, the present disclosure is not limited to the above aspects and features, and the above and additional aspects and features will be set forth in the description that follows, and may be apparent from the following description.

According to one aspect of the present disclosure, a secondary battery includes: an electrode assembly including a first electrode, a second electrode, and a separator between the first electrode and the second electrode; a case accommodating the electrode assembly, and having an electrolyte injection hole penetrating one side of the case for injecting an electrolyte therein; and a sealing plate on the one side of the case to seal the electrolyte injection hole. The case and the sealing plate include a same metallic material as each other.

In an embodiment, the metallic material may include stainless use steel (SUS).

In an embodiment, the one side of the case may include an injection hole outer portion surrounding around the electrolyte injection hole. The sealing plate may have a size larger than a size of the electrolyte injection hole, and may be in contact with the injection hole outer portion.

In an embodiment, the sealing plate may be welded to the injection hole outer portion.

In an embodiment, the case may include: a body having an opening in one side of the body, the body having the electrolyte injection hole; and a cover sealing the opening of the body.

In an embodiment, the secondary battery may further include: a first electrode terminal on the one side of the body, and electrically connected to the first electrode; and a second electrode terminal on the one side of the body, and electrically connected to the second electrode. A distance from the one side of the body to an upper surface of the sealing plate may be shorter than a distance from the one side of the body to an upper surface of the first electrode terminal, and may be longer than a distance from the one side of the body to an upper surface of the second electrode terminal.

In an embodiment, a thickness of the one side of the case may be less than or equal to 100 µm.

In an embodiment, a distance from an outer circumferential surface of the electrolyte injection hole to one end of the sealing plate along a width direction of the case from a center of the electrolyte injection hole may be less than or equal to 350 µm.

In an embodiment, the secondary battery may further include an adhesive layer interposed between the case and the sealing plate. The adhesive layer may have a size larger than a size of the electrolyte injection hole, and may have a through-hole. The sealing plate may seal the electrolyte injection hole and the through-hole.

In an embodiment, the one side of the case may include an adhesive layer outer portion surrounding around the adhesive layer. The sealing plate may have a size larger than that of the adhesive layer, and may be in contact with the adhesive layer outer portion.

In an embodiment, the sealing plate may be welded to the adhesive layer outer portion, and the adhesive layer outer portion may not overlap with the adhesive layer in a thickness direction of the sealing plate.

In an embodiment, a distance from one end of the adhesive layer to one end of the sealing plate along a width direction of the case from a center of the electrolyte injection hole may be less than or equal to 350 µm.

According to one aspect of the present disclosure, a method of manufacturing a secondary battery includes: preparing an electrode assembly including a first electrode, a second electrode, and a separator disposed between the first electrode and the second electrode; preparing a case having an electrolyte injection hole formed on one side of the case; inserting the electrode assembly through an open side of a body of the case; coupling a cover of the case to the open side of the body; injecting an electrolyte into the case through the electrolyte injection hole; and sealing the electrolyte injection hole by disposing a sealing plate on the one side of the case. The case and the sealing plate include a same metallic material as each other.

In an embodiment, after the injecting of the electrolyte, and before the sealing of the electrolyte injection hole with the sealing plate, the method may further include: sealing the electrolyte injection hole by disposing an adhesive layer on the one side of the case; removing the adhesive layer; and additionally injecting an electrolyte through the electrolyte injection hole.

In an embodiment, the one side of the case may include an injection hole outer portion surrounding around the electrolyte injection hole, the sealing plate may have a size larger than a size of the electrolyte injection hole, and the sealing of the electrolyte injection hole with the sealing plate may include welding the sealing plate to the injection hole outer portion.

In an embodiment, after the injecting of the electrolyte, and before the sealing of the electrolyte injection hole with the sealing plate, the method may further include: sealing the electrolyte injection hole by disposing an adhesive layer on the one side of the case; forming a through-hole in the adhesive layer to expose the electrolyte injection hole; and additionally injecting an electrolyte through the electrolyte injection hole and the through-hole. The sealing of the electrolyte injection hole with the sealing plate may include sealing the electrolyte injection hole and the through-hole with the sealing plate.

In an embodiment, the forming of the through-hole may include punching the adhesive layer.

In an embodiment, the one side of the case may include an adhesive layer outer portion surrounding around the adhesive layer, the sealing plate may have a size larger than a size of the adhesive layer, and the sealing of the electrolyte injection hole with the sealing plate may include welding the sealing plate to the adhesive layer outer portion.

In an embodiment, the metallic material may include stainless use steel (SUS).

In an embodiment, the preparing of the case may include: forming a first electrode terminal disposed on one side of the body of the case, and electrically connected to the first electrode; and forming a second electrode terminal disposed on the one side of the body of the case, and electrically connected to the second electrode. A distance from the one side of the body to an upper surface of the sealing plate may be shorter than a distance from the one side of the body to an upper surface of the first electrode terminal, and may be longer than a distance from the one side of the body to an upper surface of the second electrode terminal.

According to some embodiments of the present disclosure, by configuring a sealing member that finally seals an electrolyte injection hole as a sealing plate including a metallic material, a sealing performance for the electrolyte injection hole may be improved. As a result, a leakage of an electrolyte, a contamination inside a secondary-battery cell during an aging process, and the like may be prevented, minimized, or reduced.

According to some embodiments of the present disclosure, by additionally supplying an electrolyte to prevent or substantially prevent a deterioration of lifespan characteristics of the secondary battery due to an electrolyte depletion or changes in an electrolyte distribution as charging and discharging are repeated, and the like, a degree of an electrolyte impregnation may be improved.

However, the present disclosure is not limited to the above aspects and features, and the above and additional aspects and features will be set forth, in part, in the detailed description that follows with reference to the drawings, and in part, may be apparent therefrom, or may be learned by practicing one or more of the presented embodiments of the present disclosure.

### BRIEF DESCRIPTION OF THE DRAWINGS

The above and other aspects and features of the present disclosure will be more clearly understood from the following detailed description of the illustrative, nonlimiting embodiments with reference to the accompanying drawings.
FIG. 1 is a perspective view illustrating an example of a secondary battery according to an embodiment of the present disclosure.
FIG. 2 is an exploded perspective view illustrating an example of a secondary battery according to an embodiment of the present disclosure.
FIG. 3 is a flowchart illustrating a method of manufacturing a secondary battery according to an embodiment of the present disclosure.
FIG. 4 is a schematic diagram illustrating a process of a method of manufacturing a secondary battery according to an embodiment of the present disclosure.
FIG. 5 is a schematic diagram illustrating a process of a method of manufacturing a secondary battery according to an embodiment of the present disclosure.
FIG. 6 is a cross-sectional view of one side of a case taken along the line A-A' of FIG. 5, according to an embodiment of the present disclosure.
FIG. 7 is an exploded perspective view illustrating an example of a secondary battery according to an embodiment of the present disclosure.
FIG. 8 is a flowchart illustrating a method of manufacturing a secondary battery according to an embodiment of the present disclosure.
FIG. 9 is a schematic diagram illustrating a process of a method of manufacturing a secondary battery according to an embodiment of the present disclosure.
FIG. 10 is a schematic diagram illustrating a process of a method of manufacturing a secondary battery according to an embodiment of the present disclosure.
FIG. 11 is a cross-sectional view of one side of a case taken along the line B-B' of FIG. 10, according to an embodiment of the present disclosure.

### DETAILED DESCRIPTION

Hereinafter, embodiments will be described in more detail with reference to the accompanying drawings, in which like reference numbers refer to like elements throughout. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described. Unless otherwise noted, like reference numerals denote like elements throughout the attached drawings and the written description, and thus, redundant description thereof may not be repeated.

When a certain embodiment may be implemented differently, a specific process order may be different from the described order. For example, two consecutively described processes may be performed at the same or substantially at the same time, or may be performed in an order opposite to the described order.

Further, as would be understood by a person having ordinary skill in the art, in view of the present disclosure in its entirety, each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner, unless otherwise stated or implied.

In the drawings, the relative sizes, thicknesses, and ratios of elements, layers, and regions may be exaggerated and/or simplified for clarity. Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly.

Further, it should be expected that the shapes shown in the figures may vary in practice depending, for example, on tolerances and/or manufacturing techniques. Accordingly, the embodiments of the present disclosure should not be construed as being limited to the specific shapes shown in the figures, and should be construed considering changes in shapes that may occur, for example, as a result of manufacturing. As such, the shapes shown in the drawings may not depict the actual shapes of areas of the device, and the present disclosure is not limited thereto.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

References to two compared elements, features, and the like as being "the same" as each other may mean that they are "substantially the same" as each other. Thus, the phrase "substantially the same" may include a case having a deviation or a variation that is considered low in the art, for example, such as a deviation or a variation of 5% or less. In addition, when a certain parameter is referred to as being uniform in a given region, it may mean that it is uniform in terms of an average.

In the figures, the x-axis, the y-axis, and the z-axis are not limited to three axes of the rectangular coordinate system, and may be interpreted in a broader sense. For example, the x-axis, the y-axis, and the z-axis may be perpendicular to or substantially perpendicular to one another, or may represent different directions from each other that are not perpendicular to one another.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section.

It will be understood that when an element or layer is referred to as being "on," "connected to," or "coupled to" another element or layer, it can be directly on, connected to, or coupled to the other element or layer, or one or more intervening elements or layers may be present. Similarly, when a layer, an area, or an element is referred to as being "electrically connected" to another layer, area, or element, it may be directly electrically connected to the other layer, area, or element, and/or may be indirectly electrically connected with one or more intervening layers, areas, or elements therebetween. In addition, it will also be understood that when an element or layer is referred to as being "between" two elements or layers, it can be the only element or layer between the two elements or layers, or one or more intervening elements or layers may also be present.

The terminology used herein is for the purpose of describing particular embodiments and is not intended to be limiting of the present disclosure. As used herein, the singular forms "a" and "an" are intended to include the plural forms as well, unless the context clearly indicates otherwise. It will be further understood that the terms "comprises," "comprising," "includes," "including," "has," "have," and "having," when used in this specification, specify the presence of the stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. For example, the expression "A and/or B" denotes A, B, or A and B. Expressions such as "at least one of," when preceding a list of elements, modify the entire list of elements and do not modify the individual elements of the list. For example, the expression "at least one of a, b, or c," "at least one of a, b, and c," and "at least one selected from the group consisting of a, b, and c" indicates only a, only b, only c, both a and b, both a and c, both b and c, all of a, b, and c, or variations thereof.

As used herein, the term "substantially," "about," and similar terms are used as terms of approximation and not as terms of degree, and are intended to account for the inherent variations in measured or calculated values that would be recognized by those of ordinary skill in the art. Further, the use of "may" when describing embodiments of the present disclosure refers to "one or more embodiments of the present disclosure." As used herein, the terms "use," "using," and "used" may be considered synonymous with the terms "utilize," "utilizing," and "utilized," respectively.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

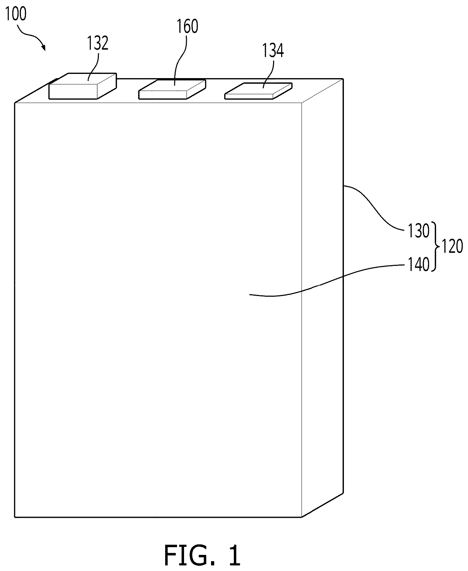

FIG. 1 is a perspective view illustrating an example of a secondary battery according to an embodiment of the present disclosure.

Referring to FIG. 1, a secondary battery 100 may include an electrode assembly, and a case 120 accommodating the electrode assembly. The electrode assembly includes a positive electrode, a separator, and a negative electrode. The case 120 may accommodate the electrode assembly, and may have an electrolyte injection hole formed on one side thereof for injecting an electrolyte. In more detail, the case 120 may include a body 130 that has an opening formed on one side thereof and includes the electrolyte injection hole, and a cover 140 sealing the opening of the body 130. The case 120 may be formed of a metallic material including stainless use steel (SUS) (e.g., stainless steel), and the secondary battery 100 may be an SUS can-kind of secondary battery 100, but the present disclosure is not limited thereto. For example, the body 130 and the cover 140 may be formed of a conductive metal, such as stainless use steel (SUS) (e.g., stainless steel), aluminum, an aluminum alloy, or a nickel-plated steel, thereby forming the overall exterior of the secondary battery 100.

Each of the positive electrode and the negative electrode may include a current collector formed of a thin metal foil. The thin metal foil may have a coated portion on which an active material is coated, and an uncoated portion on which the active material is not coated.

The positive electrode and the negative electrode may be wound after interposing the separator, which is an insulator, therebetween. However, the present disclosure is not limited thereto, and the electrode assembly may have a suitable structure in which a positive electrode and a negative electrode, each formed of a plurality of sheets, are alternately stacked with a separator interposed therebetween.

The secondary battery 100 illustrated in FIG. 1 may be a lithium secondary battery.

A positive electrode for a lithium secondary battery may include a current collector, and a positive electrode active material layer formed on the current collector. The positive electrode active material layer may include a positive electrode active material, and may further include a binder and/or a conductive material.

An amount of the positive electrode active material may be about 90 wt% to about 99.5 wt% based on 100 wt% of the positive electrode active material layer. Amounts of the binder and the conductive material may be about 0.5 wt% to about 5 wt%, respectively, based on 100 wt% of the positive electrode active material layer.

The current collector may be aluminum (Al), but is not limited thereto.

The positive electrode active material may include a compound (e.g., a lithiated intercalation compound) that is capable of intercalating and deintercalating lithium. In more detail, at least one of a composite oxide of lithium and/or a metal selected from cobalt, manganese, nickel, and/or suitable combinations thereof may be used.

The composite oxide may be a lithium transition metal composite oxide. Some examples of the composite oxide may include a lithium nickel-based oxide, a lithium cobalt-based oxide, a lithium manganese-based oxide, a lithium iron phosphate-based compound, a cobalt-free nickel-manganese-based oxide, or a suitable combination thereof.

As an example, the following compounds represented by any one of the following Chemical Formulas may be used: LiₐA_{1-b}X_{b}O_{2-c}D_{c}(0.90≤a≤1.8,0≤b≤0.5, and 0≤c≤0.05); LiₐMn_{2-b}X_{b}O_{4-c}D_{c}(0.90≤a≤1.8, 0≤b≤0.5, and 0≤c≤0.05); LiₐNi_{1-b-c}CO_{b}X_{c}O_{2-α}D_{α}(0.90≤a≤1.8, 0≤b≤0.5, 0≤c≤0.5, and 0<α<2); LiₐNi_{1-b-c}Mn_{b}X_{c}O_{2-α}D_{α}(0.90≤a≤1.8, 0≤b≤0.5, 0≤c≤0.5, and 0<α<2); LiₐNi_{b}Co_{c}L¹_{d}GₑO₂(0.90≤a≤1.8, 0≤b≤0.9, 0≤c≤0.5, 0≤d≤0.5, and 0≤e≤0.1); LiₐNiG_{b}O₂(0.90≤a≤1.8 and 0.001≤b≤0.1); LiₐCoG_{b}O₂ (0.90≤a≤1.8 and 0.001≤b≤0.1); LiₐMn_{1-b}G_{b}O₂(0.90≤a≤1.8 and 0.001≤b≤0.1); LiₐMn₂G_{b}O₄ (0.90≤a≤1.8 and 0.001≤b≤0.1); LiₐMn_{1-g}G_{g}PO₄(0.90≤a≤1.8 and 0≤g≤0.5); Li(_{3-f})Fe₂(PO₄)₃(0≤f≤2); or LiₐFePO₄ (0.90≤a≤1.8).

In the above Chemical Formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and L1 is Mn, Al, or a combination thereof.

A negative electrode for a lithium secondary battery may include a current collector, and a negative electrode active material layer disposed on the current collector. The negative electrode active material layer may include a negative electrode active material, and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

The binder may include a non-aqueous binder, an aqueous binder, a dry binder, or a suitable combination thereof. When an aqueous binder is used as the negative electrode binder, a cellulose-based compound capable of imparting a viscosity may be further included.

The negative current collector may include a copper foil, a nickel foil, a stainless steel foil, a titanium foil, a nickel foam, a copper foam, a polymer substrate coated with a conductive metal, or a suitable combination thereof.

The negative electrode active material may include a suitable material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example. crystalline carbon, amorphous carbon, or a suitable combination thereof. The crystalline carbon may be graphite, such as a non-shaped, sheet-shaped, flake-shaped, sphere-shaped, or fiber-shaped natural graphite or artificial graphite. The amorphous carbon may be a soft carbon, a hard carbon, a mesophase pitch carbonization product, calcined coke, and/or the like.

The material capable of doping/dedoping lithium may be a Si-based negative electrode active material or a Sn-based negative electrode active material. The Si-based negative electrode active material may include silicon, a silicon-carbon composite, SiOx (0 < x < 2), and/or the like.

The silicon-carbon composite may be a composite of silicon and amorphous carbon. According to an embodiment, the silicon-carbon composite may be in a form of silicon particles, and amorphous carbon coated on the surface of the silicon particles. The silicon-carbon composite may further include crystalline carbon. For example, the silicon-carbon composite may include a core including crystalline carbon and silicon particles, and an amorphous carbon coating layer on a surface of the core.

Depending on the kind of the rechargeable lithium battery, a separator may be present between the positive electrode and the negative electrode. The separator may include polyethylene, polypropylene, polyvinylidene fluoride, or a multilayered film of two or more layers thereof, and a mixed multilayered film, such as a polyethylene/polypropylene two-layered separator, polyethylene/polypropylene/polyethylene three-layered separator, polypropylene/polyethylene/polypropylene three-layered separator, and/or the like.

The separator may include a porous substrate, and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and/or a suitable combination thereof, but the present disclosure is not limited thereto.

The organic material and the inorganic material may be mixed in one coating layer, or a coating layer including an organic material and a coating layer including an inorganic material may be stacked.

In an embodiment, the secondary battery 100 may further include a first electrode terminal 132 and a second electrode terminal 134. The first electrode terminal 132 may be electrically connected to the first electrode of the electrode assembly, and the second electrode terminal 134 may be electrically connected to the second electrode of the electrode assembly. In some embodiments, the first electrode terminal 132 and the second electrode terminal 134 may be disposed on one side of the body 130 of the case 120. Positions of the first electrode terminal 132 and the second electrode terminal 134 are not limited to the positions shown in FIG. 1, and may be variously modified as needed or desired.

In an embodiment, the body 130 may include the electrolyte injection hole for injecting an electrolyte. For example, the electrolyte injection hole may be a through-hole formed in one side of the body 130. After the body 130 and the cover 140 are joined and sealed together, the electrolyte injection hole may be used to inject an electrolyte into the inside of the case 120 of the secondary battery 100. After the electrolyte is injected, a sealing plate 160 may be disposed on one side of the case 120 to seal the electrolyte injection hole. Although the sealing plate 160 according to an embodiment of the present disclosure is shown as being located between the first electrode terminal 132 and the second electrode terminal 134, the present disclosure is not limited thereto, and a position of the sealing plate 160 may be variously modified as needed or desired.

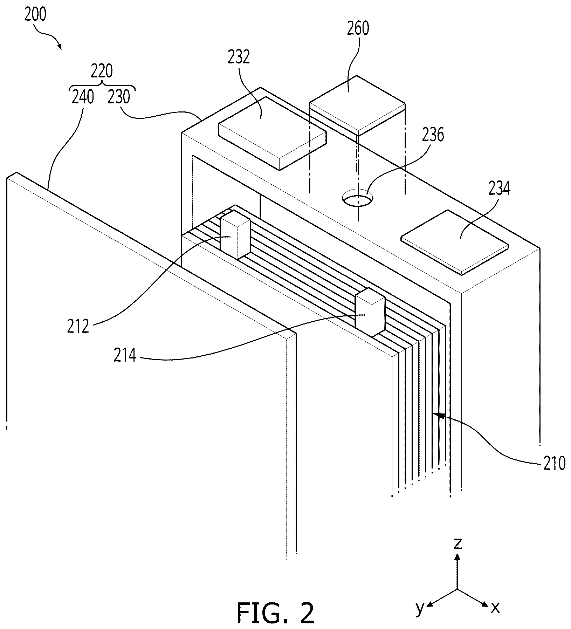

FIG. 2 is an exploded perspective view illustrating an example of a secondary battery according to an embodiment of the present disclosure.

A secondary battery 200 according to an embodiment of the present disclosure may include an electrode assembly 210, a case 220, and a sealing plate 260. The electrode assembly 210 may include a first electrode, a second electrode, and a separator disposed between the first electrode and the second electrode. The case 220 may accommodate the electrode assembly 210, and may have an electrolyte injection hole 236 formed on one side thereof for injecting an electrolyte therein. The sealing plate 260 may be disposed on the one side of the case 220 to seal the electrolyte injection hole 236. The case 220 and the sealing plate 260 may be composed of the same metallic material as each other. For example, the metallic material may include stainless use steel (SUS).

In the electrode assembly 210, a first electrode tab 212 may be connected to one side of the first electrode, and a second electrode tab 214 may be connected to one side of the second electrode. The first electrode tab 212 and the second electrode tab 214 may be connected by welding tabs to non-coated portions of the first electrode and the second electrode, or may be formed by punching the non-coated portions of the first electrode and the second electrode. In a stacked state, the first electrode tab 212 and the second electrode tab 214 may be arranged side by side with each other at a constant interval, but the present disclosure is not limited thereto. For example, in a wound state, the first electrode tab 212 and the second electrode tab 214 may be arranged side by side with each other at a constant interval. In another example, the first electrode tab 212 and the second electrode tab 214 may be disposed on different sides of the electrode assembly 210 from each other. According to an embodiment, the first electrode may be a positive electrode, and the second electrode may be a negative electrode. According to another embodiment, the first electrode may be a negative electrode, and the second electrode may be a positive electrode.

The case 220 may include a body 230 and a cover 240. In more detail, the case 220 may include the body 230 that has an opening formed on one side thereof and includes the electrolyte injection hole 236, and the cover 240 to seal the opening of the body 230. In an embodiment, the body 230 and the cover 240 may be composed of the same metallic material as each other. For example, the body 230 and the cover 240 may include stainless use steel (SUS).

The body 230 may include a receiving portion and a flange. In more detail, the receiving portion, in which the electrode assembly 210 is accommodated, may be formed in an approximately central region of the body 230 by press working or the like. In some embodiments, a flange that extends outward from an upper end of the receiving portion may be formed. For example, a plurality of flanges may be formed in four directions at an upper edge of the receiving portion.

The body 230 and the cover 240 may be joined together to form an exterior of the secondary battery 200. For example, the body 230 and the cover 240 may be metal-joined (e.g., welded, brazed, soldered, and/or the like) with each other. In this case, the flange of the body 230 and an edge of the cover 240 may be joined together. After the body 230 and the cover 240 are joined with each other, at least a part of the flange may be cut using a laser to improve an energy density of the secondary battery 200.

However, the present disclosure is not limited thereto, and the body 230 may not include a flange, such that the body 230 and the cover 240 may be joined together in a state in which no flange is present.

In an embodiment, the secondary battery 200 may further include a first electrode terminal 232 and a second electrode terminal 234. The first electrode terminal 232 may be electrically connected to the first electrode of the electrode assembly 210, and the second electrode terminal 234 may be electrically connected to the second electrode of the electrode assembly 210. The first electrode terminal 232 may be electrically connected to the first electrode of the electrode assembly 210 through the first electrode tab 212, and the second electrode terminal 234 may be electrically connected to the second electrode of the electrode assembly 210 through the second electrode tab 214. Additionally, the first electrode terminal 232 and the second electrode terminal 234 may be disposed on one side of the body 230 of the case 220. However, the positions of the first electrode terminal 232 and the second electrode terminal 234 are not limited to the positions shown in FIGS. 1 and 2, and may be variously modified as needed or desired.

In an embodiment, the case 220 may include the electrolyte injection hole 236 for injecting an electrolyte therein. For example, the case 220 may include the electrolyte injection hole 236 formed in one side of the body 230. The electrolyte injection hole 236 may be a through-hole formed in one side of the body 230, and may be formed to inject an electrolyte into an interior of the case 220 of the secondary battery 200 after the body 230 and the cover 240 are joined together and sealed. After the electrolyte is injected, the sealing plate 260 may be disposed on one side of the case 220 to seal the electrolyte injection hole 236. Although the electrolyte injection hole 236 is shown as being located between the first electrode terminal 232 and the second electrode terminal 234, the present disclosure is not limited thereto, and a position thereof may be variously modified as needed or desired.

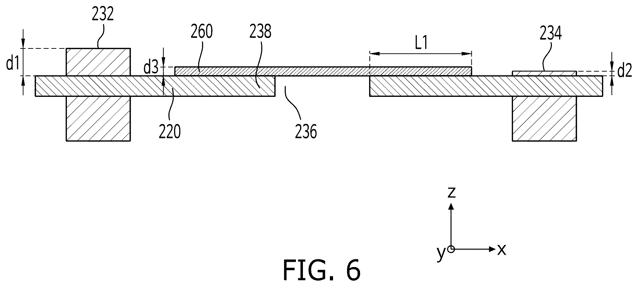

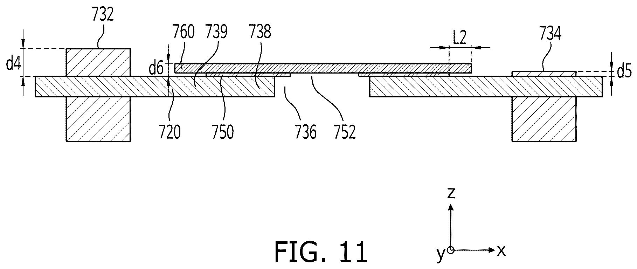

In an embodiment, the sealing plate 260 may be composed of the same metallic material as that of the case 220. In more detail, the case 220 and the sealing plate 260 may include stainless use steel (SUS). In some embodiments, the sealing plate 260 may have a size larger than that of the electrolyte injection hole 236. In more detail, a length of the sealing plate 260 in the X-axis direction (e.g., a width direction of the case) may be longer than a diameter of the electrolyte injection hole 236. Further, a length of the sealing plate 260 in the Y-axis direction (e.g., a thickness direction or a depth direction of the case) may be longer than the diameter of the electrolyte injection hole 236. The X-axis direction may refer to the width direction of the case 220, the Y-axis direction may refer to the thickness direction or the depth direction of the case 220, and the Z-axis direction may refer to the length direction of the case 220. An example of a specific structure of the sealing plate 260 will be described in more detail below with reference to FIGS. 6 and 11.

In an embodiment, one side of the case 220 may include an injection-hole outer portion that is formed to surround (e.g., around a periphery of) the electrolyte injection hole 236. For example, the injection-hole outer portion may be a region within a suitable distance (e.g., a predetermined distance) from an edge of the electrolyte injection hole 236. The injection-hole outer portion may be circular or rectangular, but is not limited thereto. The sealing plate 260 may be in contact with the injection-hole outer portion. In more detail, the sealing plate 260 may be welded to the injection-hole outer portion.

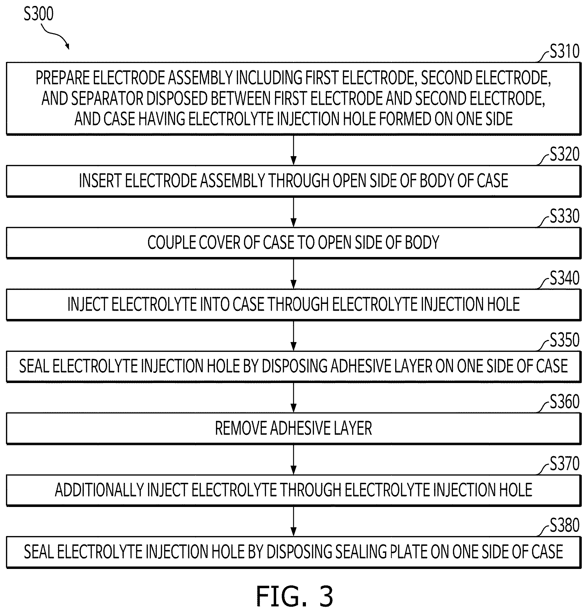

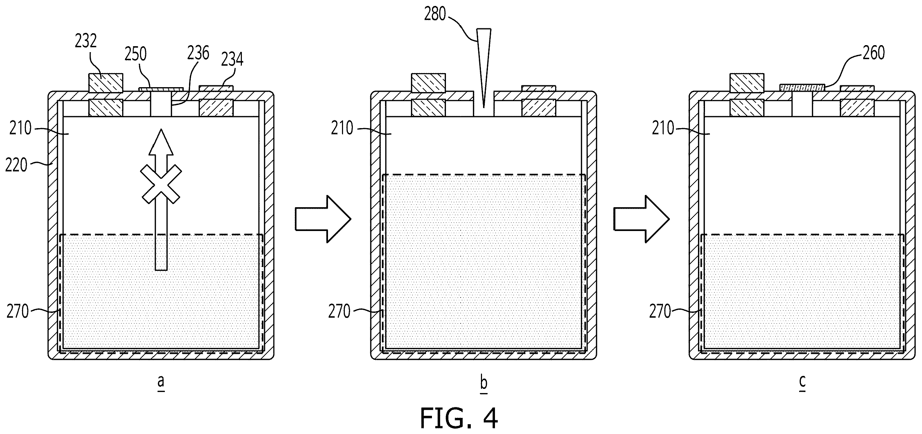

FIG. 3 is a flowchart illustrating a method of manufacturing a secondary battery according to an embodiment of the present disclosure. FIG. 4 is a schematic diagram illustrating a process of a method of manufacturing a secondary battery according to an embodiment of the present disclosure.

Referring to FIG. 3, a method S300 of manufacturing a secondary battery according to an embodiment of the present disclosure may include preparing an electrode assembly that includes a first electrode, a second electrode, and a separator disposed between the first electrode and the second electrode, and a case that has an electrolyte injection hole formed on one side thereof (S310). The electrode assembly may be inserted through an open side of a body of the case (S320). A cover of the case may be coupled to the open side of the body (S330). An electrolyte may be injected into the case through the electrolyte injection hole (S340). The electrolyte injection hole may be sealed by disposing a sealing plate on the one side of the case (S380). The case and the sealing plate may be composed of the same metallic material as each other. For example, the metallic material may include stainless use steel (SUS).

According to an embodiment, the method S300 may further include, after injecting the electrolyte (S340) and before sealing the electrolyte injection hole with the sealing plate (S380), sealing the electrolyte injection hole by disposing an adhesive layer on the one side of the case (S350). The adhesive layer may be removed (S360), and an electrolyte may be additionally injected through the electrolyte injection hole (S370).

Referring to FIG. 4, a secondary battery manufactured by the method S300 may include the case 220 that accommodates the electrode assembly 210, the electrolyte injection hole 236 that is formed on one side of the case 220 and into which an electrolyte 270 is injected, and the sealing plate 260 that seals the electrolyte injection hole 236.

According to an embodiment, after a first supply of the electrolyte 270, a pre-charging process and an aging process may be performed. In the electrolyte-aging process, there may be a possibility of an electrolyte leakage, and a contamination inside a cell of the secondary battery during the aging process time. Therefore, as illustrated in FIG. 4, the electrolyte injection hole 236 may first be sealed by disposing the adhesive layer 250 on one side of the case 220. Accordingly, a leakage of the electrolyte 270 and a contamination inside the cell of the secondary battery may be prevented (e.g., process a).

According to an embodiment, the adhesive layer 250 may then be removed to additionally inject or supply the electrolyte 270. As such, the electrolyte 270 may be additionally injected through the electrolyte injection hole 236 (e.g., process b). When the supply of the electrolyte 270 is completed, the sealing plate 260 may be disposed on one side of the case 220 to seal the electrolyte injection hole 236 (e.g., process c). Thus, a final sealing may be performed after the additional supply of the electrolyte 270 is completed. After the sealing, a second aging process may be performed. Although two supplies of the electrolyte 270 are illustrated, the present disclosure is not limited thereto, and the number of supplies of the electrolyte 270 may be variously modified as needed or desired.

An arrow in the process a of FIG. 4 may illustrate that the adhesive layer 250 prevents or substantially prevents a leakage of the electrolyte 270. Referring to FIG. 4, a height at which the electrolyte 270 rises may indicate a process in which the electrolyte 270 rises or is impregnated. For example, the process a may illustrate that the electrolyte 270, which rises sharply immediately after the supply of the electrolyte 270, slowly decreases in height as the electrolyte 270 is impregnated into the electrode assembly 210 while pre-charging and aging are performed. The process b may illustrate that an absolute amount of the electrolyte 270 inside the case 220 increases due to the additionally supplied electrolyte 270 from an electrolyte injector 280. The process c may illustrate that, while the second aging process is performed, the electrolyte 270 is impregnated into the electrode assembly 210, and thus, the height of the electrolyte 270 decreases.

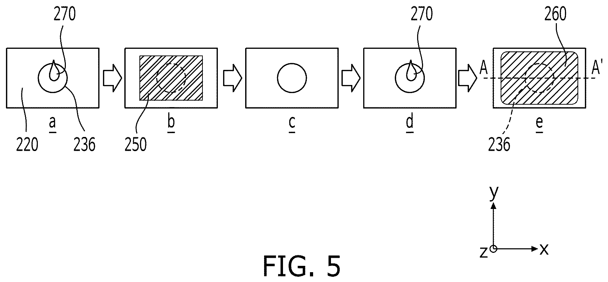

FIG. 5 is a schematic diagram illustrating a process of a method of manufacturing a secondary battery according to an embodiment of the present disclosure. FIG. 5 illustrates the electrolyte injection hole 236 of the secondary battery when viewed from above (e.g., in a plan view). Hereinafter, redundant description with reference to FIG. 5 as those described above may not be repeated.

In an embodiment, referring to FIG. 5, after injecting an electrolyte 270 into the case 220 through the electrolyte injection hole 236 (e.g., process a), the electrolyte injection hole 236 may be sealed by disposing the adhesive layer 250 on one side of the case 220 (e.g., process b). In this case, the adhesive layer 250 has a size larger than that of the electrolyte injection hole 236 formed in one side of the case 220. In more detail, a length of the adhesive layer 250 in the X-axis direction may be longer than a diameter of the electrolyte injection hole 236, and a length of the adhesive layer 250 in the Y-axis direction may be longer than the diameter of the electrolyte injection hole 236. Accordingly, the adhesive layer 250 may be in contact with an injection-hole outer portion (e.g., an outer portion of the injection-hole 236) formed in one side of the case 220, so as to surround (e.g., around a periphery of) the electrolyte injection hole 236. Thus, a sealing of the electrolyte injection hole 236 may be properly performed, thereby preventing or substantially preventing an electrolyte leakage and an internal contamination.

Next, after the adhesive layer 250 is removed (e.g., process c), the electrolyte 270 may be additionally injected through the electrolyte injection hole 236 (e.g., process d). After the additional injection of the electrolyte 270 is completed, the sealing plate 260 may be disposed on one side of the case 220 to seal the electrolyte injection hole 236 (e.g., process e). In this case, the sealing plate 260 may have a size larger than that of the electrolyte injection hole 236. In more detail, a length of the sealing plate 260 in the X-axis direction may be longer than the diameter of the electrolyte injection hole 236, and a length of the sealing plate 260 in the Y-axis direction may be longer than the diameter of the electrolyte injection hole 236. Accordingly, the sealing plate 260 may be in contact with an injection-hole outer portion formed in one side of the case 220 so as to surround (e.g., around a periphery of) the electrolyte injection hole 236. In more detail, the sealing plate 260 may be welded to the injection-hole outer portion. Thus, a sealing of the electrolyte injection hole 236 may be properly performed, thereby preventing or substantially preventing an electrolyte leakage and an internal contamination. An example of a specific structure of the sealing plate 260 will be described in more detail below with reference to FIGS. 6 and 11.

Although the adhesive layer 250 and the sealing plate 260 are illustrated in FIG. 5 as having rectangular shapes, the present disclosure is not limited thereto, and the shapes of the adhesive layer 250 and the sealing plate 260 may be variously modified as needed or desired.

FIG. 6 is a cross-sectional view of one side of a case taken along the line A-A' of FIG. 5, according to an embodiment of the present disclosure.

In an embodiment, one side of the case 220 may include an injection-hole outer portion 238 formed to surround (e.g., around a periphery of) the electrolyte injection hole 236. The sealing plate 260 may be in contact with the injection-hole outer portion 238. For example, the sealing plate 260 may be welded to the injection-hole outer portion 238. The sealing plate 260 may have a size larger than that of the electrolyte injection hole 236. In more detail, a length of the sealing plate 260 in the X-axis direction may be longer than a diameter of the electrolyte injection hole 236, and a length of the sealing plate 260 in the Y-axis direction may be longer than the diameter of the electrolyte injection hole 236. The sealing plate 260 may be rectangular, but the present disclosure is not limited thereto.

In an embodiment, a distance d3 from one side of the body of the case 220 to an upper surface of the sealing plate 260 may be shorter than a distance d1 from one side of the body of the case 220 to an upper surface of the first electrode terminal 232, and may be longer than a distance d2 from one side of the body of the case 220 to an upper surface of the second electrode terminal 234. In some embodiments, along a width direction of the case 220 from a center of the electrolyte injection hole 236, a distance L1 between an outer circumferential surface of the electrolyte injection hole 236 and one end of the sealing plate 260 may be less than or equal to 350 µm. The width direction may refer to the X-axis direction.

In an embodiment, a thickness of one side of the case 220 may be less than or equal to 100 µm. In more detail, a thickness of one side of the body of the case 220 on which the electrolyte injection hole 236 is disposed may be less than or equal to 100 µm.

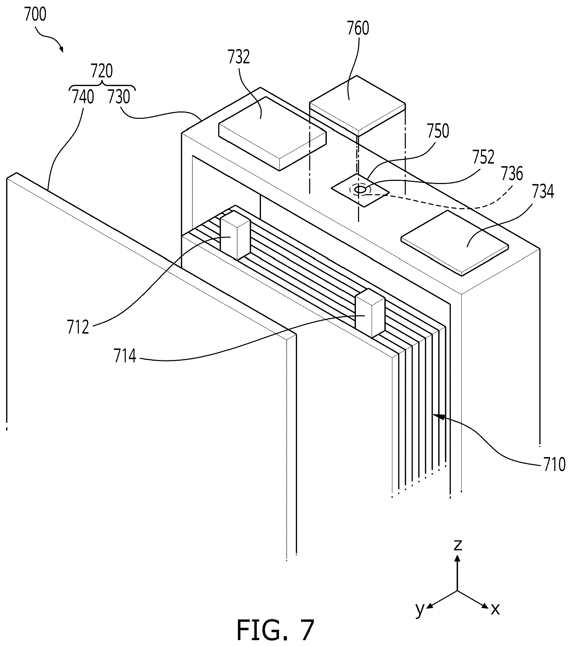

FIG. 7 is an exploded perspective view illustrating an example of a secondary battery according to an embodiment of the present disclosure.

Referring to FIG. 7, in an electrode assembly 710, a first electrode tab 712 may be connected to one side of the first electrode, and a second electrode tab 714 may be connected to one side of the second electrode. The first electrode tab 712 and the second electrode tab 714 may be connected by welding tabs to non-coated portions of the first electrode and the second electrode, or may be formed by punching the non-coated portions of the first electrode and the second electrode. In a stacked state, the first electrode tab 712 and the second electrode tab 714 may be arranged side by side with each other at a constant interval, but the present disclosure is not limited thereto. For example, in a wound state, the first electrode tab 712 and the second electrode tab 714 may be arranged side by side with each other at a constant interval. In another example, the first electrode tab 712 and the second electrode tab 714 may be disposed on different sides of the electrode assembly 710 from each other.

A case 720 may include a body 730 and a cover 740. In more detail, the case 720 may include the body 730 that has an opening formed on one side thereof and includes an electrolyte injection hole 736, and the cover 740 to seal the opening of the body 730. In an embodiment, the body 730 and the cover 740 may be composed of the same metallic material as each other. For example, the body 730 and the cover 740 may include stainless use steel (SUS).

In an embodiment, the secondary battery 700 may further include a first electrode terminal 732 and a second electrode terminal 734 disposed on one side of the body 730 of the case 720. The first electrode terminal 732 may be electrically connected to the first electrode of the electrode assembly 710, and the second electrode terminal 734 may be electrically connected to the second electrode of the electrode assembly 710. However, the present disclosure is not limited thereto, and the positions of the first electrode terminal 732 and the second electrode terminal 734 may be variously modified as needed or desired.

In an embodiment, the case 720 may include the electrolyte injection hole 736 for injecting an electrolyte therein. In more detail, the case 720 may include the electrolyte injection hole 736 formed in one side of the body 730. The electrolyte injection hole 736 may be a through-hole formed in one side of the body 730, and may be formed to inject an electrolyte into an interior of the case 720 of the secondary battery 700 after the body 730 and the cover 740 are joined together and sealed. After the electrolyte is injected, a sealing plate 760 may be disposed on one side of the case 720 to seal the electrolyte injection hole 736.

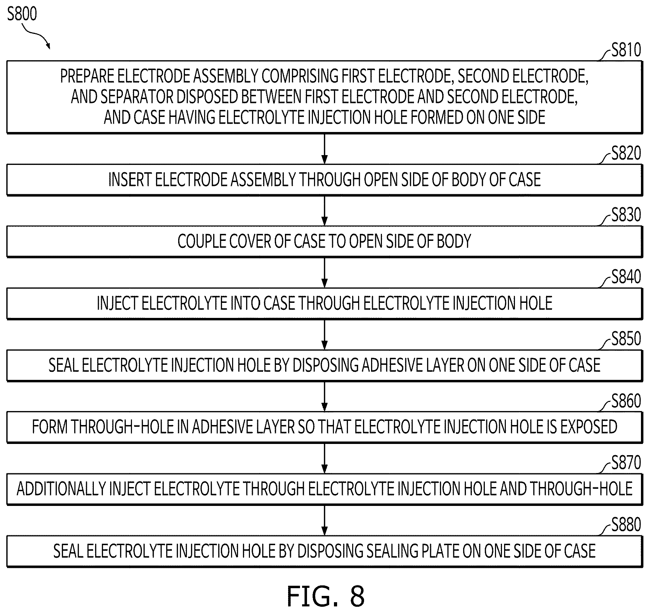

According to an embodiment, the secondary battery may further include an adhesive layer 750 interposed between the case 720 and the sealing plate 760. The adhesive layer 750 may include an electrolyte through-hole 752, and the sealing plate 760 may seal the electrolyte injection hole 736 and the through-hole 752. One side of the case 720 may include an adhesive-layer outer portion formed to surround (e.g., around a periphery of) the adhesive layer 750, and the sealing plate 760 may be in contact with the adhesive-layer outer portion. For example, the adhesive-layer outer portion may be a region within a suitable distance (e.g., a predetermined distance) from an edge of the adhesive layer 750. The adhesive-layer outer portion may be circular or rectangular, but is not limited thereto. An arrangement sequence and a method of the adhesive layer 750 and the sealing plate 760 will be described in more detail below with reference to FIGS. 8 to 10.

In an embodiment, the adhesive layer 750 may have a size larger than that of the electrolyte injection hole 736, and the sealing plate 760 may have a size larger than that of the adhesive layer 750. In more detail, a length of the adhesive layer 750 in the X-axis direction may be longer than a diameter of the electrolyte injection hole 736, and a length of the adhesive layer 750 in the Y-axis direction may be longer than the diameter of the electrolyte injection hole 736. In some embodiments, a length of the sealing plate 760 in the X-axis direction may be longer than the length of the adhesive layer 750 in the X-axis direction, and a length of the sealing plate 760 in the Y-axis direction may be longer than the length of the adhesive layer 750 in the Y-axis direction. Examples of specific structures of the adhesive layer 750 and the sealing plate 760 will be described in more detail below with reference to FIG. 11.

In an embodiment, the sealing plate 760 may be composed of the same metallic material as that of the case 720. In more detail, the case 720 and the sealing plate 760 may include stainless use steel (SUS).

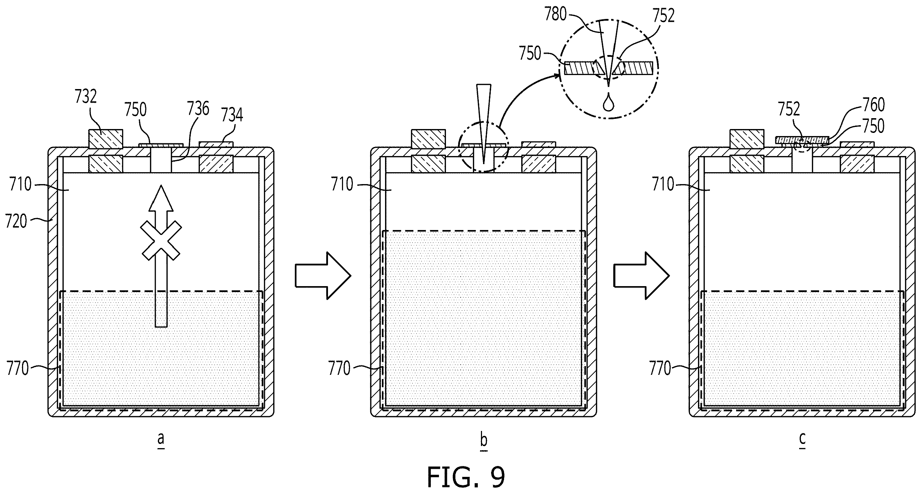

FIG. 8 is a flowchart illustrating a method of manufacturing a secondary battery according to an embodiment of the present disclosure. FIG. 9 is a schematic diagram illustrating a process of a method of manufacturing a secondary battery according to an embodiment of the present disclosure.

A method S800 of manufacturing a secondary battery according to an embodiment of the present disclosure may include preparing an electrode assembly that includes a first electrode, a second electrode, and a separator disposed between the first electrode and the second electrode, and a case that has an electrolyte injection hole formed on one side thereof (S810). The electrode assembly may be inserted through an open side of a body of the case (S820). A cover of the case may be coupled to the open side of the body (S830), and an electrolyte may be injected into the case through the electrolyte injection hole (S840). The electrolyte injection hole may be sealed by disposing a sealing plate on one side of the case (S880).

After injecting the electrolyte into the case through the electrolyte injection hole (S840), and before sealing the electrolyte injection hole with the sealing plate (S880), the method may further include sealing the electrolyte injection hole by disposing an adhesive layer on one side of the case (S850). A through-hole may be formed in the adhesive layer so that the electrolyte injection hole is exposed (S860), and an electrolyte may be additionally injected through the electrolyte injection hole and the through-hole (S870).

Referring to FIG. 9, a secondary battery manufactured by the method S800 may include the case 720 that accommodates the electrode assembly 710, the electrolyte injection hole 736 that is formed on one side of the case 720 and into which an electrolyte 770 is injected, and the sealing plate 760 that seals the electrolyte injection hole 736. In an embodiment, the secondary battery may further include the adhesive layer 750 interposed between the case 720 and the sealing plate 760. The adhesive layer 750 may have a size larger than that of the electrolyte injection hole 736, and may include the through-hole 752. In this case, the sealing plate 760 may seal the electrolyte injection hole 736 and the through-hole 752.

According to an embodiment, after the supply of the electrolyte 770, a pre-charging process and an aging process may be performed. In the electrolyte-aging process, there may be a possibility of an electrolyte leakage and a contamination inside a cell of the secondary battery during the aging-process time. Therefore, as illustrated in FIG. 9, the electrolyte injection hole 736 may be sealed by disposing the adhesive layer 750 on one side of the case 720. Accordingly, a leakage of the electrolyte 770 and a contamination inside the cell of the secondary battery may be prevented or substantially prevented (e.g., process a).

According to an embodiment, the through-hole 752 may be formed in the adhesive layer 750 so that the electrolyte injection hole 736 is exposed for an additional supply of the electrolyte 770. For example, as shown in FIG. 9, a supply portion of the electrolyte 770 of an electrolyte injector 780 for an additional supply of the electrolyte 770 may have a sharp shape. The through-hole 752 may be formed by punching the adhesive layer 750 with the sharp shape of the supply portion of the electrolyte 770 (e.g., process b). The electrolyte injector 780 may inject the electrolyte 770 after the punching.

When the supply of the electrolyte 770 is completed, the sealing plate 760 may be disposed on one side of the case 720 to seal the electrolyte injection hole 736 and the through-hole 752 (e.g., process c). Thus, a final sealing may be performed after the additional supply of the electrolyte 770 is completed. After sealing, a second aging process may be performed. Although two injections of the electrolyte 770 are illustrated, the present disclosure is not limited thereto, and the number of additional supplies of the electrolyte 770 may be variously modified as needed or desired.

An arrow in the process a may indicate a role of the adhesive layer 750 that prevents or substantially prevents a leakage of the electrolyte 770. Referring to FIG. 9, a height at which the electrolyte 770 rises may indicate a process in which the electrolyte 770 rises or is impregnated. For example, the process a may illustrate that the electrolyte 770, which rises sharply immediately after the supply of the electrolyte 770, slowly decreases in height as the electrolyte 770 is impregnated into the electrode assembly 710 while pre-charging and aging are performed. The process b may illustrate that an absolute amount of the electrolyte 770 inside the case 720 increases due to the additionally supplied electrolyte 770 from the electrolyte injector 780. The process c may illustrate that, while the second aging process is performed, the electrolyte 770 is impregnated into the electrode assembly 710 and the height of the electrolyte 770 decreases.

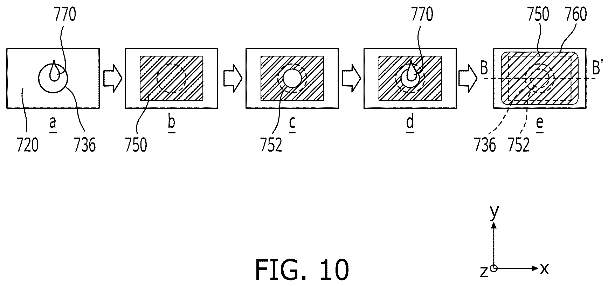

FIG. 10 is a schematic diagram illustrating a process of a method of manufacturing a secondary battery according to an embodiment of the present disclosure. FIG. 10 illustrates the electrolyte injection hole 736 of the secondary battery when viewed from above (e.g., in a plan view). Hereinafter, redundant description with reference to FIG. 10 as those described above may not be repeated.

In an embodiment, after injecting an electrolyte 770 into the case 720 through the electrolyte injection hole 736 (e.g., process a), the electrolyte injection hole 736 may be sealed by disposing the adhesive layer 750 on one side of the case 720 (e.g., process b). In this case, the adhesive layer 750 has a size larger than that of the electrolyte injection hole 736 formed in one side of the case 720. In more detail, a length of the adhesive layer 750 in the X-axis direction may be longer than a diameter of the electrolyte injection hole 736, and a length of the adhesive layer 750 in the Y-axis direction may be longer than the diameter of the electrolyte injection hole 736. Accordingly, the adhesive layer 750 may be in contact with an injection-hole outer portion formed in one side of the case 720, so as to surround (e.g., around a periphery of) the electrolyte injection hole 736. Thus, a sealing of the electrolyte injection hole 736 may be properly performed, thereby preventing or substantially preventing an electrolyte leakage and an internal contamination.

A through-hole 752 may be formed in the adhesive layer 750 (e.g., process c) so that the electrolyte injection hole 736 is exposed, and an additional supply of the electrolyte 770 may be performed through the through-hole 752 and the electrolyte injection hole 736 (e.g., process d). When the supply of the electrolyte 770 is completed, the sealing plate 760 may be disposed on one side of the case 720 to seal the electrolyte injection hole 736 and the through-hole 752 (e.g., process e).

In an embodiment, the sealing plate 760 may have a size larger than that of the adhesive layer 750. In more detail, a length of the sealing plate 760 in the X-axis direction may be longer than the length of the adhesive layer 750 in the X-axis direction, and a length of the sealing plate 760 in the Y-axis direction may be longer than the length of the adhesive layer 750 in the Y-axis direction. Accordingly, the sealing plate 760 may be in contact with an adhesive-layer outer portion formed in one side of the case 720, so as to surround (e.g., around a periphery of) the adhesive layer 750. In more detail, the sealing plate 760 may be welded to the adhesive-layer outer portion. Thus, a sealing of the electrolyte injection hole 736 and the through-hole 752 may be properly performed, thereby preventing or substantially preventing an electrolyte leakage and an internal contamination. Examples of specific structures of the sealing plate 760 and the adhesive layer 750 will be described in more detail below with reference to FIG. 11.

Referring to FIG. 10, although the adhesive layer 750 and the sealing plate 760 are illustrated as having rectangular shapes, the present disclosure is not limited thereto, and the shapes of the adhesive layer 750 and the sealing plate 760 may be variously modified as needed or desired.

FIG. 11 is a cross-sectional view of one side of a case taken along the line B-B' of FIG. 10, according to an embodiment of the present disclosure.

In an embodiment, one side of the case 720 may include an injection-hole outer portion 738 formed to surround (e.g., around a periphery of) the electrolyte injection hole 736. The adhesive layer 750 may be in contact with the injection-hole outer portion 738. The adhesive layer 750 may have a size larger than that of the electrolyte injection hole 736. In more detail, a length of the adhesive layer 750 in the X-axis direction may be longer than a diameter of the electrolyte injection hole 736, and a length of the adhesive layer 750 in the Y-axis direction may be longer than the diameter of the electrolyte injection hole 736. The adhesive layer 750 may be rectangular, but the present disclosure is not limited thereto.

In an embodiment, one side of the case 720 may include an adhesive-layer outer portion 739 formed to surround (e.g., around a periphery of) the adhesive layer 750, and the sealing plate 760 may be in contact with the adhesive-layer outer portion 739. For example, the sealing plate 760 may be welded to the adhesive-layer outer portion 739. The sealing plate 760 may have a size larger than that of the adhesive layer 750. In more detail, a length of the sealing plate 760 in the X-axis direction may be longer than the length of the adhesive layer 750 in the X-axis direction, and a length of the sealing plate 760 in the Y-axis direction may be longer than the length of the adhesive layer 750 in the Y-axis direction. Accordingly, the adhesive-layer outer portion 739 may be non-overlapping with the adhesive layer 750 in a thickness direction of the sealing plate 760. The thickness direction of the sealing plate 760 may refer to the Z-axis direction. The sealing plate 760 may be rectangular, but the present disclosure is not limited thereto.

In an embodiment, a distance d6 from one side of the body of the case 720 to an upper surface of the sealing plate 760 may be shorter than a distance d4 from one side of the body of the case 720 to an upper surface of the first electrode terminal 732, and may be longer than a distance d5 from one side of the body of the case 720 to an upper surface of the second electrode terminal 734. In some embodiments, along a width direction of the case 720 from a center of the electrolyte injection hole 736, a distance L2 between one end of the adhesive layer 750 and one end of the sealing plate 760 may be less than or equal to 350 µm. The width direction may refer to the X-axis direction.

In an embodiment, a thickness of one side of the case 720 may be less than or equal to 100 µm. In more detail, a thickness of one side of the body of the case 720 on which the electrolyte injection hole 736 is disposed may be less than or equal to 100 µm.

The foregoing is illustrative of some embodiments of the present disclosure, and is not to be construed as limiting thereof. Although some embodiments have been described, those skilled in the art will readily appreciate that various modifications are possible in the embodiments. It will be understood that descriptions of features or aspects within each embodiment should typically be considered as available for other similar features or aspects in other embodiments, unless otherwise described. Thus, as would be apparent to one of ordinary skill in the art, features, characteristics, and/or elements described in connection with a particular embodiment may be used singly or in combination with features, characteristics, and/or elements described in connection with other embodiments unless otherwise specifically indicated. Therefore, it is to be understood that the foregoing is illustrative of various example embodiments and is not to be construed as limited to the specific embodiments disclosed herein.

## Claims

1. A secondary battery comprising:
an electrode assembly (210, 710) comprising a first electrode, a second electrode, and a separator between the first electrode and the second electrode;
a case (120, 220, 720) accommodating the electrode assembly, and having an electrolyte injection hole(236, 736) penetrating one side of the case for injecting an electrolyte therein; and
a sealing plate (160, 260, 760) on the one side of the case (120, 220, 720) to seal the electrolyte injection hole (236, 736),
wherein the case (120, 220, 720) and the sealing plate (160, 260, 760) comprise a same metallic material as each other.

2. The secondary battery as claimed in claim 1, wherein the metallic material comprises stainless use steel, SUS.

3. The secondary battery as claimed in claim 1 or 2, wherein the one side of the case (120, 220, 720) comprises an injection hole outer portion (238, 738) surrounding around the electrolyte injection hole (236, 736), and
the sealing plate (160, 260, 760) has a size larger than a size of the electrolyte injection hole (236, 736), and is in contact with the injection hole outer portion (238, 738).

4. The secondary battery as claimed in claim 3, wherein the sealing plate (160, 260, 760) is welded to the injection hole outer portion (238, 738).

5. The secondary battery as claimed in any one of the preceding claims, wherein the case (120, 220, 720) comprises:
a body (130, 230, 730) having an opening in one side of the body (130, 230, 730), the body having the electrolyte injection hole (236, 736); and
a cover (140, 240, 740) sealing the opening of the body (130, 230, 730).

6. The secondary battery as claimed in claim 5, further comprising:
a first electrode terminal (132, 232, 732) on the one side of the body (130, 230, 730), and electrically connected to the first electrode; and
a second electrode terminal (134, 234, 734) on the one side of the body (130, 230, 730), and electrically connected to the second electrode,
wherein a distance from the one side of the body (130, 230, 730) to an upper surface of the sealing plate (160, 260, 760) is shorter than a distance from the one side of the body (130, 230, 730) to an upper surface of the first electrode terminal (132, 232, 732), and longer than a distance from the one side of the body (130, 230, 730) to an upper surface of the second electrode terminal (134, 234, 734).

7. The secondary battery as claimed in any one of the preceding claims, wherein a thickness of the one side of the case (120, 220, 720) is less than or equal to 100 µm.

8. The secondary battery as claimed in any one of the preceding claims, wherein a distance from an outer circumferential surface of the electrolyte injection hole (236, 736) to one end of the sealing plate (160, 260, 760) along a width direction of the case (120, 220, 720) from a center of the electrolyte injection hole(236) is less than or equal to 350 µm.

9. The secondary battery as claimed in any one of the preceding claims, further comprising an adhesive layer (250, 750) interposed between the case (120, 220, 720) and the sealing plate (160, 260, 760),
wherein the adhesive layer (250, 750) has a size larger than a size of the electrolyte injection hole (236, 736), and has a through-hole, and
the sealing plate (160, 260, 760) seals the electrolyte injection hole (236, 736) and the through-hole.

10. The secondary battery as claimed in claim 9, wherein the one side of the case (120, 220, 720) comprises an adhesive layer outer portion (739) surrounding around the adhesive layer (250, 750), and
the sealing plate (160, 260, 760) has a size larger than that of the adhesive layer (250, 750), and is in contact with the adhesive layer outer portion (739).

11. The secondary battery as claimed in claim 10, wherein the sealing plate (160, 260, 760) is welded to the adhesive layer outer portion (739), and
the adhesive layer outer portion (739) does not overlap with the adhesive layer (250, 750) in a thickness direction of the sealing plate (160, 260, 760).

12. The secondary battery as claimed in any one of the claims 8 to 11, wherein a distance from one end of the adhesive layer (250, 750) to one end of the sealing plate (160, 260, 760) along a width direction of the case (120, 220, 720) from a center of the electrolyte injection hole (236, 736) is less than or equal to 350 µm.

13. A method of manufacturing a secondary battery, comprising:
preparing (S310) an electrode assembly (210, 710) comprising a first electrode, a second electrode, and a separator disposed between the first electrode and the second electrode;
preparing (S310) a case (120, 220, 720) having an electrolyte injection hole (236, 736) formed on one side of the case (120, 220, 720);
inserting (S320) the electrode assembly (210, 710) through an open side of a body (130, 230, 730) of the case (120, 220, 720);
coupling (S330) a cover (240, 740) of the case (120, 220, 720) to the open side of the body (130, 230, 730);
injecting (S340) an electrolyte into the case through the electrolyte injection hole (236, 736); and
sealing (S350) the electrolyte injection hole (236, 736) by disposing a sealing plate (160, 260, 760) on the one side of the case (120, 220, 720),
wherein the case (120, 220, 720) and the sealing plate (160, 260, 760) comprise a same metallic material as each other.

14. The method as claimed in claim 13, wherein, after the injecting of the electrolyte, and before the sealing of the electrolyte injection hole (236, 736) with the sealing plate (160, 260, 760), the method further comprises:
sealing the electrolyte injection hole (236, 736) by disposing an adhesive layer (250, 750) on the one side of the case (120, 220, 720);
removing the adhesive layer (250, 750); and
additionally injecting an electrolyte through the electrolyte injection hole (236, 736).

15. The method as claimed in claim 14, wherein the one side of the case (120, 220, 720) comprises an injection hole outer portion (238, 738) surrounding around the electrolyte injection hole (236, 736),
the sealing plate (160, 260, 760) has a size larger than a size of the electrolyte injection hole (236, 736), and
the sealing of the electrolyte injection hole (236, 736) with the sealing plate (160, 260, 760) comprises welding the sealing plate (160, 260, 760) to the injection hole outer portion (238, 738).
